(19) Europäisches Patentamt
European Patent Office
Office européen des brevets

(11) **EP 2 361 349 B1**

(12) **FASCICULE DE BREVET EUROPEEN**

(45) Date de publication et mention
de la délivrance du brevet:
**05.12.2012 Bulletin 2012/49**

(51) Int Cl.:
*F02D 41/00* (2006.01)    *F02D 21/08* (2006.01)
*F02D 41/18* (2006.01)

(21) Numéro de dépôt: **09752436.7**

(22) Date de dépôt: **30.09.2009**

(86) Numéro de dépôt international:
**PCT/FR2009/051863**

(87) Numéro de publication internationale:
**WO 2010/049615 (06.05.2010 Gazette 2010/18)**

(54) **PROCEDE D'ESTIMATION DYNAMIQUE DU DEBIT D'AIR FRAIS ALIMENTANT UN MOTEUR AVEC CIRCUITS EGR HAUTE ET BASSE PRESSION**

VERFAHREN ZUR DYNAMISCHEN SCHÄTZUNG DER FRISCHLUFTDURCHFLUSSRATE, DIE EINEM MOTOR MIT HOCHDRUCK- UND NIEDERDRUCK-AGR-KREISEN ZUGEFÜHRT WIRD.

METHOD OF DYNAMICALLY ESTIMATING THE FRESH AIR FLOW RATE SUPPLIED TO AN ENGINE WITH HIGH-PRESSURE AND LOW-PRESSURE EGR CIRCUITS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.10.2008 FR 0806028**

(43) Date de publication de la demande:
**31.08.2011 Bulletin 2011/35**

(73) Titulaire: **Renault S.A.S.**
**92100 Boulogne-Billancourt (FR)**

(72) Inventeur: **FRONTVIEILLE, Laurent**
**F-91190 Gif sur Yvette (FR)**

(56) Documents cités:
**EP-A1- 1 607 606**    **EP-A1- 1 705 354**
**DE-A1- 10 017 280**    **DE-A1- 10 158 249**
**FR-A1- 2 910 929**    **FR-A1- 2 910 934**

**Description**

La présente invention concerne le domaine du contrôle commande des moteurs à combustion internes des véhicules automobiles suralimenté au moyen d'un turbocompresseur. Le contrôle commande est la technique de gestion d'un moteur à combustion interne avec l'ensemble de ses capteurs et actionneurs. L'ensemble des lois de contrôle commande et des paramètres de caractérisation d'un moteur sont contenus dans un calculateur appelé « unité de contrôle électronique » ou UCE.

L'invention propose un procédé d'estimation dynamique, à l'aide d'un débitmètre d'air, du débit d'air frais alimentant un moteur, notamment un moteur diesel, pourvu de deux circuits de recirculation des gaz d'échappement ou circuits EGR (Exhaust Gas Recirculation). L'un des circuits est dit « circuit basse pression » ou circuit BP et l'autre est dit « circuit haute pression » ou circuit HP.

Actuellement, le durcissement des normes réglementant les émissions de gaz polluants à l'échappement de véhicule impose une diminution importante des émissions d'oxydes d'azote. La recherche de solutions techniques permettant la diminution de ces émissions est alors devenue un enjeu pour les constructeurs automobiles.

Le moteur considéré dans la présente invention comporte un bloc moteur muni de cylindres, d'un collecteur d'admission du comburant frais et d'un collecteur d'échappement des gaz brûlés. Les branches des collecteurs d'admission et d'échappement se connectent à chacun des cylindres.

Un turbocompresseur est situé en sortie et en entrée du bloc moteur. Le turbocompresseur se compose d'une turbine disposée en sortie du collecteur d'échappement du moteur et d'un compresseur disposé en entrée du collecteur d'admission du moteur. La turbine mise en mouvement par les gaz chauds issus de la combustion entraîne le compresseur de façon à ce qu'il comprime de l'air frais encore appelé gaz d'admission, cet air frais se déplaçant dans le collecteur d'admission du moteur pour alimenter, via un dispositif d'échange de chaleur, la chambre de combustion de chacun des cylindres en vue d'une combustion d'un cycle de fonctionnement suivant. De cette façon, le travail fourni par les gaz d'échappement est transmis aux gaz d'admission. L'air frais est amené à la turbine du turbocompresseur via un filtre à air. Les gaz d'échappement sont évacués via un filtre à particules.

Le filtre à particules permet de réduire la quantité de particules rejetée dans l'atmosphère. Il est composé d'un ensemble de micro-canaux dans lesquels une grande partie des particules se trouvent piégées. Une fois le filtre plein en particules, le filtre doit être vidé en brûlant les particules. Cette phase est appelée régénération. La régénération peut être obtenue soit par un dispositif de chauffe, soit par des réglages spécifiques du moteur.

La quantité d'oxydes d'azote produit par un moteur diesel est fortement liée à la composition du mélange réactif en air, en carburant et à la présence de gaz inertes dans les cylindres du moteur. Ces gaz inertes ne participent pas à la combustion et proviennent d'un circuit dérivant une partie des gaz d'échappement vers le circuit d'admission. Le circuit qui permet la recirculation des gaz d'échappement est appelé circuit EGR. L'EGR est assuré en mettant en communication le circuit d'échappement et le circuit d'admission via une section de passage dont la dimension est réglée par une vanne dite vanne EGR.

Le circuit EGR HP est dit « haute pression » car il est interne au circuit de suralimentation. En effet, un conduit de dérivation by-pass fait communiquer le collecteur d'échappement avant la turbine du turbocompresseur vers le collecteur d'admission après le compresseur du turbocompresseur via un dispositif de refroidissement. Ce conduit est muni d'une vanne de réglage de débit dite vanne EGR HP qui permet de régler la dimension du débit. Un volet papillon d'admission est situé en aval du dispositif d'échange de chaleur et en amont du raccordement du conduit by-pass avec le collecteur d'admission afin de d'augmenter la différence de pression dans le circuit EGR HP et donc d'augmenter le taux de gaz d'échappement recyclés, ou taux d'EGR, par le circuit EGR HP. Ce circuit est utilisé sur l'ensemble des moteurs diesel répondant à la norme de dépollution EURO IV.

Le circuit EGR BP est dit « basse pression » car il est externe au circuit de suralimentation. En effet, un conduit by-pass fait communiquer le circuit d'échappement en aval du filtre à particules vers le circuit d'admission de l'air frais et filtré en amont de la turbine du turbocompresseur via un dispositif de refroidissement. Ce conduit est muni d'une vanne de réglage de débit dite vanne EGR BP qui permet de régler la dimension du conduit. Un volet papillon d'échappement est situé en aval du filtre à particules et du raccordement du conduit by-pass avec le circuit d'échappement afin d'augmenter la différence de pression dans le circuit EGR HP et donc d'augmenter le taux d'EGR BP.

L'ensemble des gaz EGR BP et HP permet de baisser la quantité d'oxydes d'azote mais risque d'augmenter les fumées si le taux d'EGR est trop élevé. Il est donc fondamental de calculer la quantité juste nécessaire de gaz EGR total HP et BP. De plus, en modulant la proportion de gaz EGR BP chauds et de gaz EGR BP froids, les deux circuits EGR permettent de contrôler la thermique des gaz admis dans le moteur pour réduire les émissions d'hydrocarbure et de monoxyde de carbone et pour contrôler le délai d'auto-inflammation du carburant.

L'information du débit d'air frais permet de contrôler, d'une part, le débit EGR total HP et BP en régulant la vanne EGR HP, la vanne EGR BP, le volet papillon d'admission et le volet papillon d'échappement et, d'autre part, le débit d'air frais sur une consigne contenue dans l'UCE. Elle permet également de limiter la quantité de carburant injecté dans le moteur pour éviter une émission de particules trop importante.

Lorsque le conducteur souhaite la puissance maximale du moteur, sur une accélération, la position « pied à fond » de la pédale d'accélérateur est traduite par l'UCE en une consigne de débit carburant et les vannes EGR HP et BP sont fermées. Cette consigne de débit de carburant est limitée en transitoire par un seuil qui est fonction du débit d'air frais et du régime du moteur. Ce dispositif permet de limiter les particules présentes dans les gaz d'échappement du moteur lors des transitoires et limite la vitesse de chargement du filtre à particules. Cette limitation est appelée « limitation de fumée ». Si la valeur de débit fournie par le débitmètre est exploitée directement par la limitation de fumée, nous ne tenons pas compte du temps de vidange du circuit d'admission en gaz d'EGR HP et BP. Par conséquent, il faut disposer d'une valeur de débit d'air frais à l'entrée du moteur pour limiter correctement les fumées en transitoire.

Pour réduire les émissions de polluants, il est nécessaire de contrôler précisément le taux d'EGR total à l'entrée du moteur. Ce contrôle se fait principalement avec l'aide de la mesure du débit d'air frais. Cependant, cette mesure étant faite en amont du circuit d'admission du moteur, elle ne tient pas compte de la dynamique de ce débit d'air frais. Par conséquent, il faut également disposer d'une valeur de débit d'air frais à l'entrée du moteur pour limiter correctement les fumées d'EGR total à l'entrée du moteur.

La connaissance de l'information du débit d'air frais est donc fondamentale.

Des solutions existent mais ne sont pas assez satisfaisantes.

La demande de brevet FR 2 910 929 propose une estimation du débit d'air entrant dans un moteur équipé des deux circuits EGR HP et BP sans l'aide d'un débitmètre. Or, cette solution est lourde à mettre en oeuvre. Elle est en outre sensible et peu robuste vis-à-vis des dispersions sur l'ensemble des capteurs utilisés pour cette estimation.

Une autre solution est décrite dans le brevet FR 2 789 731 où une méthode est proposée d'estimation du débit d'air frais à partir du régime du moteur, de la pression et de la température d'air dans le collecteur d'admission et une estimation du débit EGR HP à l'aide de la position de la vanne et de l'application de la formule de Barré de Saint-Venant. Cependant, cette solution n'est plus valable en présence d'une contre-pression variable à l'échappement, par exemple, lors de l'utilisation d'un turbocompresseur à géométrie variable ou d'un filtre à particules.

La demande de brevet FR 2 824 596 offre une amélioration de la solution proposée dans la demande de brevet FR 2 789 731.en tenant compte de la différence de pression aux bornes de la vanne EGR HP lors de l'application de la formule de Barré de Saint-Venant. L'inconvénient principal est la forte sensibilité du modèle lorsque les pressions aux bornes de la vanne EGR sont très proches, ce qui représente la majorité des points de fonctionnement.

Les demandes de brevets FR 2 833 648, FR 2 833 649 et EP1 024 262 A2 proposent une méthode d'estimation du débit EGR HP par l'utilisation de la formule de Barré de Saint-Venant puis du débit d'air frais en retranchant le débit EGR HP à la quantité totale admise. Le débit d'air frais résultant est filtré par l'utilisation d'un observateur sur la pression dans le collecteur. On retrouve le même inconvénient que pour la demande de brevet FR 2 824 596.

Les brevets US 5 270 935 et US 5 273 019 décrivent une méthode d'estimation du débit d'air entrant dans le moteur par comparaison entre une valeur de pression dans le collecteur estimée par un modèle paramétrique et la valeur de cette pression mesurée. L'écart entre la mesure et l'estimation de la pression dans le collecteur est combiné à un jeu de coefficients de correction optimisé pour recalculer à la fois la pression dans le collecteur et le débit d'air.

Le brevet US 5 273 019 permet la détermination du débit d'EGR HP entrant par l'estimation de la pression d'air partielle dans le collecteur par la même méthode que les brevets précédents. Les solutions proposées par ces brevets sont difficilement applicables dans des calculateurs industriels en raison, d'une part, de la difficulté de leur intégration liée à la mémoire requise et, d'autre part, au temps de calcul important nécessaire.

Aucun élément de cet art antérieur n'est compatible avec un moteur équipé de deux circuits d'EGR l'un BP et l'autre HP et l'utilisation d'un débitmètre d'air.

La présente invention a pour but de pallier un ou plusieurs inconvénients de l'art antérieur et propose un procédé d'estimation dynamique du débit d'air frais entrant dans un moteur équipé de deux circuits EGR, l'un EGR HP et l'autre BP avec l'aide d'un débitmètre d'air situé dans le circuit d'admission en amont du turbocompresseur et du raccordement du conduit by-pass du circuit EGR BP.

Selon l'invention, le procédé d'estimation du débit d'air frais dynamique entrant dans un moteur, notamment un moteur diesel, suralimenté par un turbocompresseur, équipé au moins d'un collecteur d'admission, d'un échangeur, d'un filtre à air, d'un circuit EGR HP, d'un circuit EGR BP, d'une commande de volet d'admission, d'une commande de volet d'échappement, d'un débitmètre, d'un capteur de pression, d'un capteur de température reliés à un UCE est caractérisé en ce qu'il comporte les étapes suivantes :

- Mesure de la température après l'échangeur par le capteur de température, de la pression dans le collecteur par le capteur de pression et du débit d'air frais par le débitmètre,
- Calcul par l'UCE du débit moteur à partir de la mesure de la température après l'échangeur et de la pression dans le collecteur,
- Calcul par l'UCE de la masse de gaz entre le débitmètre et l'entrée du collecteur à partir de la mesure de la température après l'échangeur et de la pression dans le collecteur,
- Calcul par l'UCE de la masse de gaz dans le collecteur à partir de la mesure de la température après l'échangeur et de la pression dans le collecteur,
- Mesure ou estimation du débit d'EGR HP,
- Calcul par l'UCE du débit de gaz dans le collecteur à partir du débit moteur et de la masse de gaz dans le collecteur ;
- Estimation par l'UCE du taux d'EGR BP à l'entrée du collecteur à partir de la masse de gaz entre le débitmètre et l'entrée du collecteur, du débit de gaz dans le collecteur et du débit d'air frais mesuré par le débitmètre ;
- Calcul par l'UCE de la masse d'air entre le débitmètre et l'entrée du collecteur à partir du taux d'EGR BP à l'entrée du collecteur et du débit d'air frais mesuré par le débitmètre ;
- Estimation par l'UCE du taux d'EGR à l'entrée du moteur à partir de la masse d'air entre le débitmètre et l'entrée du collecteur, de la masse dans le collecteur et du débit d'air frais mesuré par le débitmètre,
- Estimation par l'UCE du débit d'air dynamique moteur à partir du débit moteur et du taux d'EGR à l'entrée du moteur.

Selon une autre particularité, l'estimation du débit d'air frais est effectuée en prenant en compte les informations suivantes :

- détection de l'ouverture du volet d'admission ;
- température dans tout le circuit d'admission considérée égale à la température $T_{ape}$ après l'échangeur ;
- masse de gaz entre le débitmètre et l'entrée du collecteur estimée par un algorithme mettant en oeuvre la formule suivante :
$$M_{cool} = \frac{P_{coll} \cdot V_{cool}}{R \cdot T_{ape}}$$
, avec $P_{coll}$ = pression mesurée dans le collecteur, $V_{cool}$ = volume de gaz entre le débitmètre et l'entrée du collecteur, $T_{ape}$ = température mesurée après l'échangeur et R la constante individuelle de l'air ;

- masse de gaz dans le collecteur estimée par un algorithme mettant en oeuvre la formule suivante :
$$M_{coll} = \frac{P_{coll} \cdot V_{coll}}{R \cdot T_{ape}}$$
avec $V_{coll}$ = volume du collecteur ;

- le débit EGR HP $Q_{EGR\_HP\_coll}$ entrant dans le collecteur est rendu disponible par l'UCE par mesure ou estimation.

Selon une autre particularité, le procédé d'estimation est caractérisé en ce qu'il met en oeuvre les opérations suivantes :

- détermination du débit $Q_{mot}$ de gaz entré dans le moteur

$$Q_{mot} = 3600 \times \left[ \frac{P_{coll}}{R \cdot T_{ape}} \frac{V_{cyl}}{2} \frac{N}{60} \eta_r \left( N, \frac{P_{coll}}{R \cdot T_{ape}} \right) \right]$$

avec $V_{cyl}$ = cylindrée du moteur, $N$ = régime de rotation du moteur, $P_{coll}$ = pression mesurée dans le collecteur, $T_{ape}$ = température mesuré après l'échangeur, $\eta_r$ = rendement volumétrique du moteur et R = constante individuelle de l'air
- Calcul par l'UCE du taux d'EGR dans le moteur

$$\tau_{EGR\_mot} = \frac{M_{EGR\_coll}}{M_{EGR\_coll} + M_{air\_coll}} = \frac{Q_{EGR\_mot}}{Q_{EGR\_mot} + Q_{air\_mot}}$$

avec $\tau_{EGR\_mot}$ = taux d'EGR à l'entrée du moteur, $M_{EGR\_coll}$ = masse des gaz EGR HP dans le volume du collecteur, $M_{air\_coll}$ = masse de l'air dans le volume du collecteur, $Q_{EGR\_mot}$ = débit d'EGR HP et BP entrant dans le moteur, $Q_{air\_mot}$ = débit d'air entrant dans le moteur
- Calcul par l'UCE du taux d'EGR BP à l'entrée du collecteur

$$\tau_{EGR\_BP\_coll} = \frac{M_{EGR\_BP\_cool}}{M_{EGR\_BP\_cool} + M_{air\_cool}} = \frac{Q_{EGR\_BP\_coll}}{Q_{EGR\_BP\_coll} + Q_{air\_coll}}$$

avec

$\tau_{EGR\_BP\_Coll}$ = taux d'EGR BP à l'entrée du collecteur, $M_{EGR\_BP\_cool}$ = masse des gaz EGR BP entre le débitmètre et l'entrée du collecteur, $M_{air\_cool}$ = masse de l'air entre le débitmètre et l'entrée du collecteur, $Q_{EGR\_BP\_coll}$ = débit d'EGR BP entrant dans le collecteur, $Q_{air\_coll}$ = débit d'air entrant dans le collecteur

- Commande des volets pour assurer la conservation de la masse dans le collecteur

$$\begin{cases} \dfrac{dM_{air\_coll}}{dt} = Q_{air\_coll} - Q_{air\_mot} \\ \dfrac{dM_{EGR\_coll}}{dt} = Q_{EGR\_coll} - Q_{EGR\_mot} \end{cases}$$

et détermination de celle-ci par mise en oeuvre d'un algorithme de calcul mettant en oeuvre l'équation suivante

$$\frac{dM_{coll}}{dt} = Q_{air\_coll} + Q_{EGR\_coll} - Q_{mot} \quad \text{avec } Q_{mot} = Q_{air\_mot} + Q_{EGR\_mot} \text{ et } M_{coll} = M_{air\_coll} + M_{EGR\_coll.}$$

- Commande des volets pour assurer la conservation de la masse dans l'échangeur

$$\begin{cases} \dfrac{dM_{air\_cool}}{dt} = Q_{débitmètre} - Q_{air\_coll} \\ \dfrac{dM_{EGR\_BP\_cool}}{dt} = Q_{EGR\_BP\_dyn} - Q_{EGR\_BP\_coll} \end{cases}$$

et détermination de celle-ci par mise en oeuvre d'un algorithme de calcul mettant en oeuvre l'équation suivante

$$\frac{dM_{cool}}{dt} = Q_{débitmètre} + Q_{EGR\_BP\_dyn} - Q_{coll} \quad \text{avec } Q_{coll} = Q_{air\_coll} + Q_{EGR\_BP\_coll}$$

et

$$M_{cool} = M_{air\_cool} + M_{EGR\_BP\_cool} \cdot$$

à partir desquelles l'UCE estime les taux d'EGR BP et EGR moteur :
- Par la mise en oeuvre d'une équation différentielle d'estimation du taux EGR BP à l'entrée du collecteur

$$\frac{d\hat{\tau}_{EGR\_BP\_coll}}{dt} = \frac{1}{M_{cool}} \cdot \left[ \left(1 - \hat{\tau}_{EGR\_BP\_coll}\right) \cdot \left( Q_{coll} + \frac{dM_{cool}}{dt} \right) - Q_{débitmètre} \right]$$

- Et d'une équation différentielle d'estimation du taux EGR moteur

$$\frac{d\hat{\tau}_{EGR\_mot}}{dt} = \frac{1}{M_{coll}} \cdot \left[ \left(1 - \hat{\tau}_{EGR\_mot}\right) \cdot \left(Q_{mot} + \frac{dM_{coll}}{dt}\right) + \frac{dM_{air\_cool}}{dt} - Q_{d\acute{e}bitm\grave{e}tre} \right]$$

Selon un mode de réalisation, les équations différentielles en taux d'EGR sont résolues de façon discrète :

$$\hat{\tau}_{EGR\_BP\_coll} = \frac{1}{M_{cool}} \cdot \sum \left[ \left(1 - \hat{\tau}_{EGR\_BP\_coll_{n-1}}\right) \cdot \left(Q_{coll} + \frac{dM_{cool}}{dt}\right) - Q_{d\acute{e}bitm\grave{e}tre} \right]$$

et

$$\hat{\tau}_{EGR\_mot} = \frac{1}{M_{coll}} \cdot \sum \left[ \left(1 - \hat{\tau}_{EGR\_mot_{n-1}}\right) \cdot \left(Q_{mot} + \frac{dM_{coll}}{dt}\right) + \frac{dM_{air\_cool}}{dt} - Q_{d\acute{e}bitm\grave{e}tre} \right]$$

Selon un mode de réalisation sans circuit EGR HP, le procédé d'estimation du débit d'air frais entrant dans un moteur, notamment un moteur diesel, suralimenté par un turbocompresseur, équipé au moins d'un circuit EGR BP, d'un débitmètre, d'un collecteur d'admission, d'un échangeur, d'un filtre à air, d'une commande de volet d'admission, d'une commande de volet d'échappement, d'un capteur de pression et d'un capteur de température reliés à un UCE est caractérisé en ce qu'il comporte les étapes suivantes :

- Mesure de la température après l'échangeur par le capteur de température, de la pression dans le collecteur par le capteur de pression et du débit d'air frais par le débitmètre,
- Calcul par l'UCE du débit moteur à partir de la mesure de température après l'échangeur et de la pression dans le collecteur,
- Calcul par l'UCE de la masse de gaz dans l'admission à partir de la mesure de température après l'échangeur et de la pression dans le collecteur,
- Estimation par l'UCE du taux d'EGR BP dans le moteur à partir du débit d'air frais mesuré par le débitmètre, du débit moteur et de la masse de gaz dans l'admission,
- Estimation par l'UCE du débit d'air moteur à partir du taux d'EGR BP et du débit moteur.

Selon un mode de réalisation sans circuit EGR HP, l'estimation du débit d'air frais est effectuée en prenant en compte les informations suivantes :

- détection de l'ouverture du volet d'admission ;
- température dans tout le circuit d'admission considérée égale à la température $T_{ape}$ après l'échangeur ;
- masse de gaz entre le débitmètre et l'entrée du moteur estimée par un algorithme mettant en oeuvre la formule suivante :

$$M_{adm} = \frac{P_{coll} \cdot V_{adm}}{R \cdot T_{ape}} \ , \quad \text{avec } P_{coll} = \text{pression mesurée dans le collecteur,}$$

$V_{adm}$ = volume de gaz entre le débitmètre et l'entrée du moteur, $T_{ape}$ = température mesurée après l'échangeur et $R$ la constante individuelle de l'air.

Selon un mode de réalisation sans circuit EGR HP, le procédé d'estimation est caractérisé en ce qu'il met en oeuvre les opérations suivantes :

- Détermination du débit $Q_{mot}$ de gaz entré dans le moteur

$$Q_{mot} = \frac{N}{120} \cdot \frac{P_{coll}}{R \cdot T_{ape}} \cdot \eta_r \left( \frac{P_{coll}}{R \cdot T_{ape}}, N \right) \cdot V_{cyl}$$

avec $V_{cyl}$ = cylindrée du moteur,

N = régime de rotation du moteur, $P_{coll}$ = pression mesurée dans le collecteur, $T_{ape}$ = température mesuré après l'échangeur, $\eta_r$ = rendement volumétrique du moteur et R = constante individuelle de l'air

- Estimation par l'UCE du taux d'EGR BP à l'entrée du moteur

$$\frac{d\hat{\tau}_{EGR\_BP\_mot}}{dt} = \frac{1}{M_{cool}} \cdot \left[ \left(1 - \hat{\tau}_{EGR\_BP\_coll}\right) \cdot \left( Q_{mot} + \frac{dM_{adm}}{dt} \right) - Q_{débitmètre} \right]$$

Selon un mode de réalisation sans circuit EGR HP, l'équation différentielle en taux d'EGR estimé est résolue de façon discrète :

$$\hat{\tau}_{EGR\_BP\_mot} = \frac{1}{M_{cool}} \cdot \sum \left[ \left(1 - \hat{\tau}_{EGR\_BP\_mot_{n-1}}\right) \cdot \left( Q_{mot} + \frac{dM_{adm}}{dt} \right) - Q_{débitmètre} \right]$$

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :

- la figure 1 illustre un circuit de recirculation des gaz d'échappement haute pression ;
- la figure 2 illustre un circuit de recirculation des gaz d'échappement basse pression ;
- la figure 3 illustre le circuit de recirculation des gaz concerné par l'invention comportant les deux circuits EGR HP et BP ;
- la figure 4 illustre les étapes du procédé d'estimation du débit d'air frais entrant dans un moteur selon un mode de réalisation comportant les deux circuits EGR HP et BP ;
- la figure 5 illustre les étapes du procédé d'estimation du débit d'air frais entrant dans un moteur selon un autre mode de réalisation comportant le circuit EGR BP seulement.

La présente invention propose une estimation du débit d'air frais entrant dans un moteur comportant deux circuits EGR.

Il existe deux types de circuits EGR : le circuit EGR HP et le circuit EGR BP.

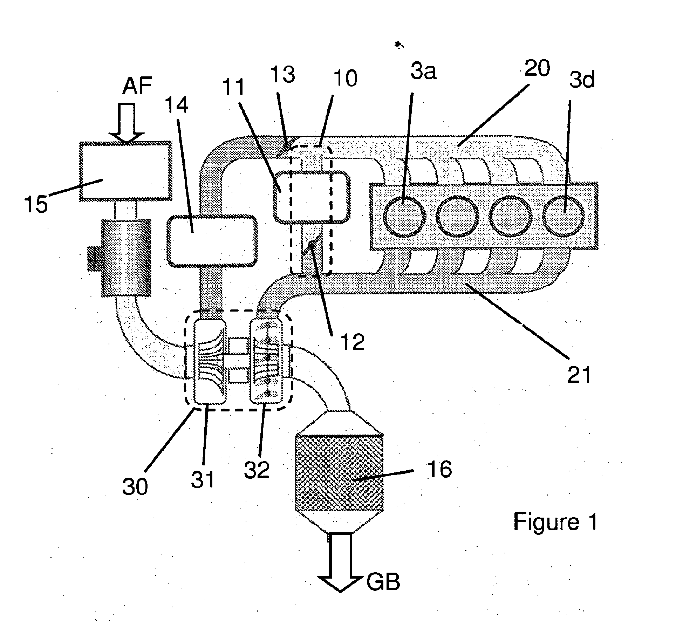

La figure 1 décrit un moteur comportant un circuit EGR HP. Il est composé d'un bloc moteur comprenant des cylindres (3a), (3b), (3c) et (3d), un collecteur d'admission (20) et d'un collecteur d'échappement (21). Un turbocompresseur (30) est situé en sortie et en entrée du bloc moteur. Il est composé d'une turbine (32) en sortie du collecteur d'échappement (21) et d'un compresseur (31) en entrée du collecteur d'admission (20). Un conduit by-pass (10) fait communiquer le collecteur d'échappement (21) avant la turbine via un dispositif de refroidissement (11). Ce conduit est muni d'une vanne EGR HP (12). Un volet d'admission (13) est situé en aval d'un dispositif d'échange de chaleur (14) et en amont du raccordement du conduit by-pass (10) avec le collecteur d'admission (20). L'air frais (AF) est amené à la turbine (31) du turbocompresseur (30) via un filtre à air (15). Les gaz d'échappement (GB) sont évacués via un filtre à particules (16).

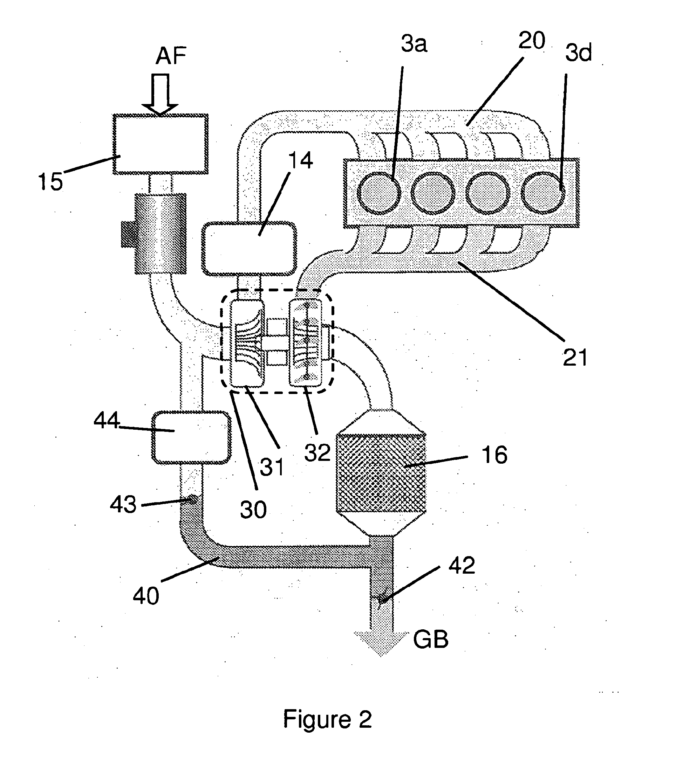

La figure 2 illustre un moteur comportant un circuit EGR BP. Le dispositif est différent de celui décrit pour la figure 1 en ce que le conduit by-pass (40) fait communiquer le circuit d'échappement (21) en aval du filtre à particules (16) vers le circuit d'admission de l'air frais (AF) ayant été filtré par un filtre à air (15) en amont de la turbine (31) du turbocompresseur (30) via un dispositif de refroidissement (44). Ce conduit by-pass (40) est muni d'une vanne EGR BP (43). Un volet d'échappement (42) est situé en val du filtre à particules (16) et du raccordement du conduit by-pass (40) avec le circuit d'échappement où sont évacués les gaz d'échappement (GB).

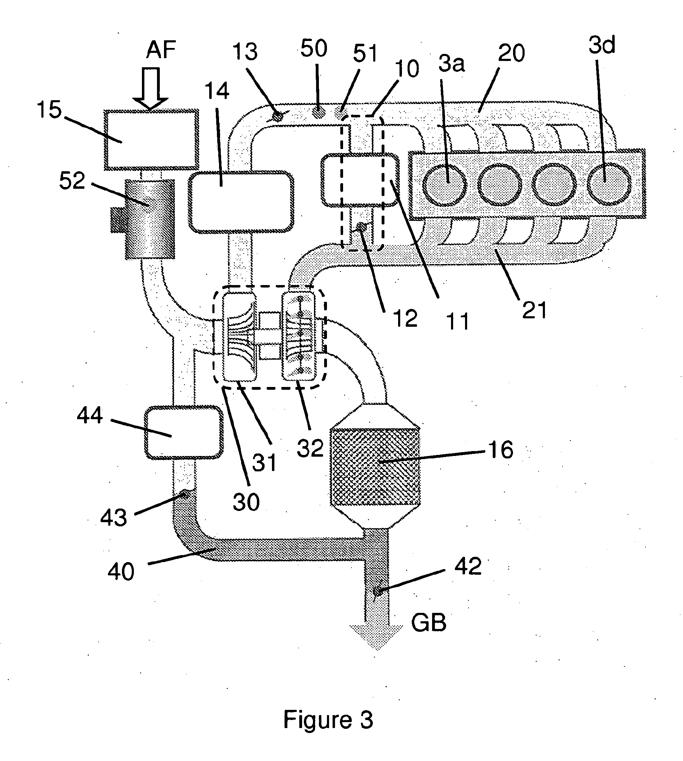

La figure 3 illustre un moteur comportant les deux types de circuits EGR : le circuit EGR HP et le circuit EGR BP avec les deux conduits by-pass (10) pour le circuit EGR HP et (40) pour le circuit EGR BP. Le procédé d'estimation du débit d'air frais nécessite, au moins, un capteur de pression (50) situé entre le volet d'admission (13) et le raccordement du collecteur (20) et du conduit by-pass EGR HP (10), un capteur de température (51) situé après l'échangeur (14) et d'un débitmètre (52) situé dans le circuit d'admission en amont du turbocompresseur (30) et en aval du filtre à air (15).

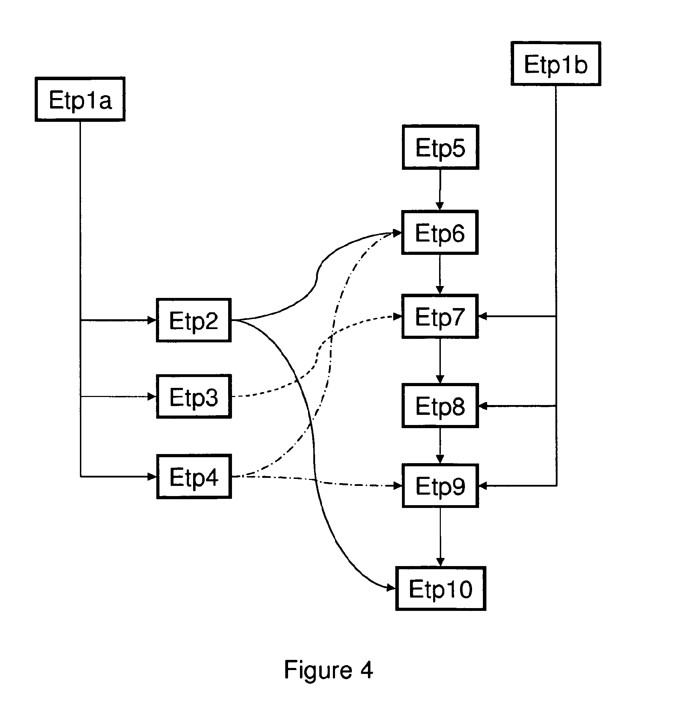

La figure 4 décrit les étapes du procédé d'estimation, selon un mode de réalisation, du débit d'air frais entrant dans un moteur équipé de deux circuits EGR HP et BP.

L'étape Etp1a consiste en la mesure de la température $T_{ape}$ après l'échangeur (14) par un capteur de température (51) et la mesure de la pression dans le collecteur $P_{coll}$ par un capteur de pression (50).

Le débit d'air frais $Q_{débitmètre}$ est mesuré par un débitmètre (52) dans l'étape Etp1 b.

$P_{coll}$ et $T_{ape}$ permettent le calcul du débit moteur $Q_{mot}$ dans l'étape Etp2, le calcul de la masse de gaz $M_{cool}$ entre le débitmètre (52) et l'entrée du collecteur (20) dans l'étape Etp3 et le calcul de la masse de gaz dans le collecteur $M_{coll}$ dans l'étape Etp4.

On mesure ou on estime le débit d'EGR HP $Q_{EGR\_HP\_coll}$ dans l'étape Etp5.

Avec le débit d'EGR HP $Q_{EGR\_HP\_coll}$ mesuré ou estimé dans l'étape Etp5, on calcule le débit de gaz dans le collecteur $Q_{coll}$ dans l'étape Etp6 à partir de $Q_{mot}$ calculé dans l'étape Etp2 et de $M_{coll}$ calculée dans l'étape Etp4.

L'étape Etp7 consiste à estimer le taux d'EGR BP $\tau_{EGR\_BP\_coll}$ à l'entrée du collecteur à partir de $M_{cool}$ calculée dans l'étape Etp4 et de $Q_{coll}$ calculé dans l'étape Etp6.

Dans l'étape Etp8, la masse d'air entre le débitmètre et l'entrée du collecteur $M_{air\_cool}$ est calculée à partir de $\hat{\tau}_{EGR\_BP\_coll}$ estimé dans l'étape Etp7 et de $Q_{débitmère}$ mesuré dans l'étape Etp1b.

Dans l'étape Etp9, le taux d'EGR à l'entrée du moteur $\hat{\tau}_{EGR\_mot}$ est estimé à partir de $M_{air\_cool}$ calculé dans l'étape Etp8, de $M_{coll}$ calculé dans l'étape Etp4 et de $Q_{débitmètre}$ mesuré dans l'étape Etp1b.

Enfin dans l'étape Etp10, le débit d'air dynamique $Q_{air\_mot}$ est estimé à partir de $\hat{\tau}_{EGR\_mot}$ calculé dans l'étape Etp9 et de $Q_{mot}$ calculé dans l'étape Etp2.

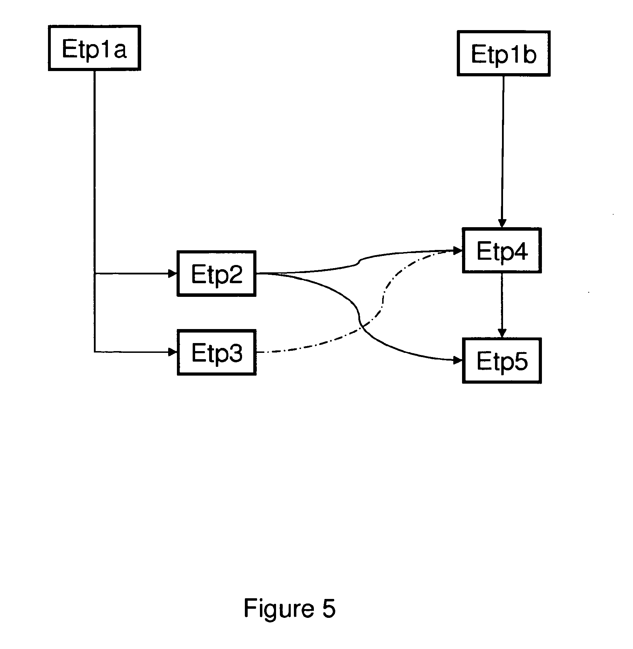

La figure 5 décrit les étapes du procédé d'estimation, selon un autre mode de réalisation, du débit d'air frais entrant dans un moteur équipé d'un circuit EGR BP.

L'étape Etp1a consiste à mesurer la température $T_{ape}$ après l'échangeur (14) par un capteur de température (51) et la pression dans le collecteur $P_{coll}$ par un capteur de pression (50).

Le débit d'air frais $Q_{débitmétre}$ est mesuré par un débitmètre (52) dans l'étape Etp1b.

$P_{coll}$ et $T_{ape}$ permettent le calcul du débit moteur $Q_{mot}$ dans l'étape Etp2 et le calcul de la masse de gaz dans l'admission $M_{adm}$ dans l'étape Etp3.

Dans l'étape Etp4, le taux d'EGR BP dans le moteur $\hat{\tau}_{EGR\_BP\_mot}$ est estimé à partir de $Q_{mot}$ calculé dans l'étape Etp2, $M_{adm}$ calculé dans l'étape Etp3 et $Q_{débilmètre}$ mesuré dans l'étape Etp1b.

Enfin, dans l'étape Etp5, le débit d'air dynamique $Q_{air\_mot}$ est calculé à partir de $\tau_{EGR\_BP\_mot}$ calculé dans l'étape Etp4 et de $Q_{mot}$ calculé dans l'étape Etp2.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

Liste des variables

$R$ = 287 J.kg$^{-1}$.K$^{-1}$ : constante individuelle de l'air ;

$\eta_r$ : rendement volumétrique du moteur exprimé comme une fonction du régime de rotation du moteur N et de la densité des gaz admis $\dfrac{P_{coll}}{R \cdot T_{ape}}$ ;

$\hat{\tau}_{EGR\_BP\_motn-1}$ : taux d'EGR BP estimé à l'entrée du moteur au pas de calcul précédent ;

$\hat{\tau}_{EGR\_mot}$ : taux d'EGR à l'entrée du moteur ;

$\hat{\tau}_{EGR\ mot}$ : taux d'EGR estimé à l'entrée du moteur ;

$\tau_{EGR\_motn-1}$ : taux d'EGR estimé à l'entrée du moteur au pas de calcul précédent ;

$\tau_{EGR\_BP\_coll}$ : taux d'EGR BP à l'entrée du collecteur ;

$\hat{\tau}_{EGR\_BP\_coll}$ : taux d'EGR BP estimé à l'entrée du collecteur ;

$M_{adm}$ : masse de gaz entre le débitmètre et l'entrée du moteur en kg ;

$M_{air\_coll}$ : masse de l'air dans le volume du collecteur en kg ;

$M_{air\_cool}$ : masse de l'air entre le débitmètre et le collecteur en kg ;

$M_{col} = M_{air\_coll} + M_{ECR\_coll}$ : masse des gaz dans le volume du collecteur en kg ;

$M_{cool} = M_{air\_cool} + M_{EGR\_BP\_cool}$ : masse des gaz entre le débitmètre et l'entrée du collecteur en kg ;

$M_{EGR\_BP\_cool}$ : masse des gaz EGR BP entre le débitmètre et l'entrée du collecteur en kg ;

$M_{EGR\_coll}$ : masse des gaz EGR HP dans le volume du collecteur en kg ;

$N$ : régime de rotation du moteur en tour.min$^{-1}$ ;

$P_{coll}$ : pression dans le collecteur en Pa ;

$Q_{air\_coll}$ : débit d'air entrant dans le collecteur en kg.h$^{-1}$ ;

$Q_{air\_mot}$ : débit d'air frais entrant dans le moteur en kg.h$^{-1}$ ;

$\hat{Q}_{air\_mot}$ : débit d'air frais estimé entrant dans le moteur en kg.h$^{-1}$ ;

$Q_{coll} = Q_{air\_coll} + Q_{EGR\_BP\_coll}$ : débit de gaz dans le collecteur en kg.h$^{-1}$ ;

$Q_{débitmètre}$ : débit d'air provenant du débitmètre en kg.h$^{-1}$ ;

$Q_{EGR\_BP\_coll}$ : débit d'EGR BP entrant dans le collecteur en kg.h$^{-1}$ ;

$Q_{EGR\_BP\_dyn}$ : débit d'EGR BP entrant dans l'échangeur en kg.h$^{-1}$ ;

$Q_{EGR\_coll}$ : débit d'EGR entrant dans le collecteur en kg.h$^{-1}$ ;

$Q_{EGR\_mot}$ : débit d'EGR HP et BP entrant dans le moteur en kg.h$^{-1}$ ;

$Q_{mot} = Q_{air\_mot} + Q_{EGR\_mot}$ : débit de gaz entrant dans le moteur kg.h$^{-1}$ ;

$T_{ape}$ : température après l'échangeur en K ;

$V_{adm}$ : volume entre le débitmètre et l'entrée du moteur en m$^3$ ;

$V_{coll}$ : volume du collecteur en m$^3$ ;

$V_{cool}$ : volume entre le débitmètre et l'entrée du collecteur en m$^3$ ;

$V_{cyl}$ : cylindrée du moteur en m$^3$ ;

## Revendications

1. Procédé d'estimation du débit d'air frais entrant dans un moteur, notamment un moteur diesel, suralimenté par un turbocompresseur (30), équipé au moins d'un collecteur d'admission (20) de volume $V_{coll}$, d'un échangeur (14), d'un filtre à air (16), d'un circuit EGR HP (10), d'un circuit EGR BP (40), d'un volet d'admission (13), d'un volet d'échappement (42), d'un débitmètre (52), d'un capteur de pression (50) et un capteur de température (51) reliés à une unité de contrôle électronique (UCE) et d'un conduit de volume $V_{cool}$ entre le débitmètre (52) et l'entrée du collecteur d'admission **caractérisé en ce qu'**il comporte les étapes suivantes :

   - Mesure de la température $T_{ape}$ après l'échangeur (14) par le capteur de température (51), de la pression dans le collecteur $P_{coll}$ par le capteur de pression (50) et du débit d'air frais $Q_{débitmètre}$ par le débitmètre (52),
   - Calcul par l'UCE du débit moteur $Q_{mot}$ à partir de la mesure de la température $T_{ape}$ après l'échangeur (14) et de la pression $P_{coll}$ dans le collecteur d'admission (20),
   - Calcul par l'UCE de la masse de gaz entre le débitmètre (52) et l'entrée du collecteur d'admission (20) à partir de la mesure de la température $T_{ape}$ après l'échangeur (14) et de la pression $P_{coll}$ dans le collecteur d'admission (20),
   - Calcul par l'UCE de la masse de gaz dans le collecteur (20) à partir de la mesure de la température $T_{ape}$ après l'échangeur (14) et de la pression $P_{coll}$ dans le collecteur d'admission (20),
   - Mesure ou estimation du débit d'EGR HP,
   - Calcul par l'UCE du débit de gaz dans le collecteur (20) à partir du débit moteur et de la masse de gaz dans le collecteur (20) ;
   - Estimation par l'UCE du taux d'EGR BP à l'entrée du collecteur (20) à partir de la masse de gaz entre le débitmètre (52) et l'entrée du collecteur, du débit de gaz dans le collecteur ;
   - Calcul par l'UCE de la masse d'air entre le débitmètre (52) et l'entrée du collecteur à partir du taux d'EGR BP à l'entrée du collecteur (20) et du débit d'air frais $Q_{débitmètre}$ mesuré par le débitmètre (52) ;
   - Estimation par l'UCE du taux d'EGR $\hat{\tau}_{EGR\_mot}$ à l'entrée du moteur à partir de la masse d'air entre le débitmètre (52) et l'entrée du collecteur (20), de la masse dans le collecteur (20) et du débit d'air frais $Q_{débitmétre}$ mesuré par le débitmètre (52),
   - Estimation par l'UCE du débit d'air dynamique moteur à partir du débit moteur et du taux d'EGR à l'entrée du moteur par l'expression $\hat{Q}_{air\_mot} = (1 - \tilde{\tau}_{EGR\_mot}) \cdot Q_{mot}.$

2. Procédé d'estimation du débit d'air frais entrant dans un moteur, selon la revendication 1, **caractérisé en ce que** le débitmètre (52) est situé après le filtre à air (15).

3. Procédé d'estimation du débit d'air frais entrant dans un moteur, selon la revendication 1, **caractérisé en ce que** le capteur de pression (50) et le capteur de température (51) sont situés dans le collecteur après l'échangeur (14) et le volet d'admission (13).

4. Procédé d'estimation du débit d'air frais entrant dans un moteur, selon la revendication 1, **caractérisé en ce que** le volet d'admission (13) est ouvert.

5. Procédé d'estimation du débit d'air frais entrant dans un moteur, selon la revendication 1, **caractérisé en ce que** la température dans tout le circuit d'admission (20) est considérée égale à la température $T_{ape}$.

6. Procédé d'estimation du débit d'air frais entrant dans un moteur, selon les revendications 1 et 5, **caractérisé en ce que** la masse de gaz entre le débitmètre (52) et l'entrée du collecteur (20) estimée par un algorithme mettant en oeuvre la formule suivante: $M_{cool} = \dfrac{P_{coll} \cdot V_{cool}}{R \cdot T_{ape}}$ avec R, la constante individuelle de l'air.

7. Procédé d'estimation du débit d'air frais entrant dans un moteur, selon les revendications 1 et 5, **caractérisé en ce que** la masse de gaz dans le collecteur (20) estimée par un algorithme mettant en oeuvre la formule suivante :

$$M_{coll} = \frac{P_{coll} \cdot V_{coll}}{R \cdot T_{ape}}$$ avec R , la constante individuelle de l'air.

8. Procédé d'estimation du débit d'air frais entrant dans un moteur, selon la revendication 1, **caractérisé en ce que** les taux d'EGR sont calculés discrètement à partir d'équations différentielles.

9. Procédé d'estimation du débit d'air frais entrant dans un moteur, selon les revendications 1 à 8 **caractérisé en ce qu'**il est adapté pour un moteur sans EGR HP, auquel cas les étapes sont :

- Mesure de la température $T_{ape}$ après l'échangeur (14) par le capteur de température (51), de la pression dans le collecteur $P_{coll}$ par le capteur de pression (50) et du débit d'air frais $Q_{débitmètre}$ par le débitmètre (52),
- Calcul par l'UCE du débit moteur $Q_{mot}$ à partir de la mesure de la température $T_{ape}$ après l'échangeur (14) et de la pression $P_{coll}$ dans le collecteur d'admission (20),
- Calcul par l'UCE de la masse dans le collecteur d'admission (20) à partir de la mesure de la température $T_{ape}$ après l'échangeur (14) et de la pression $P_{coll}$ dans le collecteur d'admission (20),
- Estimation par l'UCE du taux d'EGR BP $\tau_{EGR\_BP\_mot}$ à l'entrée du collecteur (20) à partir de la masse de gaz dans le collecteur d'admission (20), du débit de gaz dans le collecteur d'admission (20) et du débit d'air frais $Q_{débitmètre}$ mesuré par le débitmètre (52) ;
- Estimation par l'UCE du débit d'air dynamique moteur à partir du débit moteur et du taux d'EGR BP à l'entrée du moteur par l'expression $\hat{Q}_{air\_mot} = (1 - \hat{\tau}_{EGR\_BP\_mot}) \cdot Q_{mot}$.

**Claims**

1. Method for estimating the flow rate of cool air entering an engine, particularly a diesel engine, turbocharged by a turbocharger (30), fitted at least with an intake manifold (20) of volume $V_{coll}$, with an exchanger (14), with an air filter (16), with an HP EGR circuit (10), with an LP EGR circuit (40), with an intake butterfly valve (13), with an exhaust butterfly valve (42), with a flow meter (52), with a pressure sensor (50) and a temperature sensor (51) connected to an electronic control unit (ECU) and with a duct of volume $V_{cool}$ between the flow meter (52) and the inlet of the intake manifold, **characterized in that** it comprises the following steps:

- measurement of the temperature $T_{ape}$ after the exchanger (14) by the temperature sensor (51), of the pressure in the manifold $P_{coll}$ by the pressure sensor (50) and of the flow rate of cool air $Q_{débitmètre}$ by the flow meter (52),
- computation by the ECU of the engine flow rate $Q_{mot}$ based on the measurement of the temperature $T_{ape}$ after the exchanger (14) and of the pressure $P_{coll}$ in the intake manifold (20),
- computation by the ECU of the mass of gas between the flow meter (52) and the inlet of the intake manifold (20) based on the measurement of the temperature $T_{ape}$ after the exchanger (14) and of the pressure $P_{coll}$ in the intake manifold (20),

- computation by the ECU of the mass of gas in the manifold (20) based on the measurement of the temperature $T_{ape}$ after the exchanger (14) and of the pressure $P_{coll}$ in the intake manifold (20),
- measurement or estimation of the HP EGR flow rate,
- computation by the ECU of the gas flow rate in the manifold (20) based on the engine flow rate and on the mass of gas in the manifold (20);
- estimation by the ECU of the rate of LP EGR at the inlet of the manifold (20) based on the mass of gas between the flow meter (52) and the manifold inlet and on the flow rate of gas in the manifold;
- computation by the ECU of the mass of air between the flow meter (52) and the manifold inlet based on the LP EGR rate at the inlet of the manifold (20) and on the flow rate of cool air $Q_{débitmètre}$ measured by the flow meter (52);
- estimation by the ECU of the EGR rate $\hat{\tau}_{EGR\_mot}$ at the engine inlet based on the mass of air between the flow meter (52) and the inlet of the manifold (20), on the mass in the manifold (20) and on the flow rate of cool air $Q_{débitmètre}$ measured by the flow meter (52),
- estimation by the ECU of the dynamic engine air flow rate based on the engine flow rate and on the EGR rate at the engine inlet by the expression $\hat{Q}_{air\_mot} = (1-\hat{\tau}_{EGR\_mot})Q_{mot}$.

2. Method for estimating the flow rate of cool air entering an engine, according to Claim 1, **characterized in that** the flow meter (52) is situated after the air filter (15).

3. Method for estimating the flow rate of cool air entering an engine, according to Claim 1, **characterized in that** the pressure sensor (50) and the temperature sensor (51) are situated in the manifold after the exchanger (14) and the intake butterfly valve (13).

4. Method for estimating the flow rate of cool air entering an engine, according to Claim 1, **characterized in that** the intake butterfly valve (13) is open.

5. Method for estimating the flow rate of cool air entering an engine, according to Claim 1, **characterized in that** the temperature in the whole intake circuit (20) is considered to be equal to the temperature $T_{ape}$.

6. Method for estimating the flow rate of cool air entering an engine, according to Claims 1 and 5, **characterized in that** the mass of gas between the flow meter (52) and the inlet of the manifold (20) is estimated by an algorithm using the following formula: $M_{cool} = \dfrac{P_{coll} \cdot V_{cool}}{R \cdot T_{ape}}$ where $R$ is the individual constant of the air.

7. Method for estimating the flow rate of cool air entering an engine, according to Claims 1 and 5, **characterized in that** the mass of gas in the manifold (20) is estimated by an algorithm using the following formula:

$$M_{coll} = \frac{P_{coll} \cdot V_{coll}}{R \cdot T_{ape}}$$ where $R$ is the individual constant of the air.

8. Method for estimating the flow rate of cool air entering an engine, according to Claim 1, **characterized in that** the EGR rates are computed discretely based on differential equations.

9. Method for estimating the flow rate of cool air entering an engine, according to Claims 1 to 8, **characterized in that** it is adapted for an engine with no HP EGR, in which case the steps are:

- measurement of the temperature $T_{ape}$ after the exchanger (14) by the temperature sensor (51), of the pressure in the manifold $P_{coll}$ by the pressure sensor (50) and of the flow rate of cool air $Q_{débitmètre}$ by the flow meter (52),
- computation by the ECU of the engine flow rate $Q_{mot}$ based on the measurement of the temperature $T_{ape}$ after the exchanger (14) and of the pressure $P_{coll}$ in the intake manifold (20),
- computation by the ECU of the mass in the intake manifold (20) based on the measurement of the temperature $T_{ape}$ after the exchanger (14) and of the pressure $P_{coll}$ in the intake manifold (20),
- estimation by the ECU of the LP EGR rate $\hat{\tau}_{EGR\_BP\_mot}$ at the inlet of the manifold (20) based on the mass of gas in the intake manifold (20), on the flow rate of gas in the intake manifold (20) and on the flow rate of cool air $Q_{débitmètre}$ measured by the flow meter (52) ;
- estimation by the ECU of the dynamic engine air flow rate based on the engine flow rate and on the LP EGR rate at the engine inlet by the expression $\hat{Q}_{air\_mot} = (1-\hat{\tau}_{EGR\_BP\_mot}) \cdot Q_{mot}$.

**Patentansprüche**

1. Verfahren zur Schätzung des Frischluftdurchsatzes, der in einen von einem Turbolader (30) aufgeladenen Motor, insbesondere einen Dieselmotor, eintritt, der mit mindestens einem Ansaugkrümmer (20) eines Volumens $V_{coll}$, einem Tauscher (14), einem Luftfilter (16), einem HD-AGR-Kreislauf (10), einem ND-AGR-Kreislauf (40), einer Ansaugklappe (13), einer Abgasklappe (42), einem Durchsatzmesser (52), einem Drucksensor (50) und einem Temperaturfühler (51), die mit einer elektronischen Steuereinheit (UCE) verbunden sind, und mit einem Kanal eines Volumens $V_{cool}$ zwischen dem Durchsatzmesser (52) und dem Eingang des Ansaugkrümmers ausgestattet ist, **dadurch gekennzeichnet, dass** er die folgenden Schritte aufweist:

   - Messung der Temperatur $T_{ape}$ hinter dem Tauscher (14) durch den Temperaturfühler (51), des Drucks im Krümmer $P_{coll}$ durch den Drucksensor (50) und des Frischluftdurchsatzes $Q_{Durchsatzmesser}$ durch den Durchsatzmesser (52),
   - Berechnung, durch die UCE, des Motordurchsatzes $Q_{mot}$ ausgehend von der Messung der Temperatur $T_{ape}$ hinter dem Tauscher (14) und des Drucks $P_{coll}$ im Ansaugkrümmer (20),
   - Berechnung, durch die UCE, der Gasmasse zwischen dem Durchsatzmesser (52) und dem Eingang des Ansaugkrümmers (20) ausgehend von der Messung der Temperatur $T_{ape}$ nach dem Tauscher (14) und des Drucks $P_{coll}$ im Ansaugkrümmer (20),
   - Berechnung, durch die UCE, der Gasmasse im Krümmer (20) ausgehend von der Messung der Temperatur $T_{ape}$ hinter dem Tauscher (14) und des Drucks $P_{coll}$ im Ansaugkrümmer (20),
   - Messung oder Schätzung des HD-AGR-Durchsatzes,
   - Berechnung, durch die UCE, des Gasdurchsatzes im Krümmer (20) ausgehend vom Motordurchsatz und von der Gasmasse im Krümmer (20);
   - Schätzung, durch die UCE, der ND-AGR-Rate am Eingang des Krümmers (20) ausgehend von der Gasmasse zwischen dem Durchsatzmesser (52) und dem Eingang des Krümmers, des Gasdurchsatzes im Krümmer;
   - Berechnung, durch die UCE, der Luftmasse zwischen dem Durchsatzmesser (52) und dem Eingang des Krümmers ausgehend von der ND-AGR-Rate am Eingang des Krümmers (20) und vom Frischluftdurchsatz $Q_{Durchsatzmesser}$ gemessen vom Durchsatzmesser (52);
   - Schätzung, durch die UCE, der AGR-Rate $\hat{\tau}_{AGR\_mot}$ am Eingang des Motors ausgehend von der Luftmasse zwischen dem Durchsatzmesser (52) und dem Eingang des Krümmers (20), von der Masse im Krümmer (20) und vom Frischluftdurchsatz $Q_{Durchsatzmesser}$ gemessen vom Durchsatzmesser (52);
   - Schätzung, durch die UCE, des dynamischen Motor-Luftdurchsatzes ausgehend vom Motordurchsatz und von der AGR-Rate am Eingang des Motors durch den Ausdruck $\overline{Q}_{Luft\_mot} = (I-\hat{\tau}_{AGR\_mot}) \cdot Q_{mot}$.

2. Verfahren zur Schätzung des in einen Motor eintretenden Frischluftdurchsatzes nach Anspruch 1, **dadurch gekennzeichnet, dass** der Durchsatzmesser (52) sich hinter dem Luftfilter (15) befindet.

3. Verfahren zur Schätzung des in einen Motor eintretenden Frischluftdurchsatzes nach Anspruch 1, **dadurch gekennzeichnet, dass** der Drucksensor (50) und der Temperaturfühler (51) sich im Krümmer hinter dem Tauscher (14) und der Ansaugklappe (13) befinden.

4. Verfahren zur Schätzung des in einen Motor eintretenden Frischluftdurchsatzes nach Anspruch 1, **dadurch gekennzeichnet, dass** die Ansaugklappe (13) offen ist.

5. Verfahren zur Schätzung des in einen Motor eintretenden Frischluftdurchsatzes nach Anspruch 1, **dadurch gekennzeichnet, dass** die Temperatur im ganzen Ansaugkreis (20) gleich der Temperatur $T_{ape}$ angenommen wird.

6. Verfahren zur Schätzung des in einen Motor eintretenden Frischluftdurchsatzes nach den Ansprüchen 1 und 5, **dadurch gekennzeichnet, dass** die Gasmasse zwischen dem Durchsatzmesser (52) und dem Eingang des Krümmers (20) durch einen Algorithmus geschätzt wird, der die folgende Formel verwendet:

$$M_{cool} = \frac{P_{coll} \cdot V_{cool}}{R \cdot T_{ape}},$$

mit R der individuellen Konstante der Luft.

7. Verfahren zur Schätzung des in einen Motor eintretenden Frischluftdurchsatzes nach den Ansprüchen 1 und 5, **dadurch gekennzeichnet, dass** die Gasmasse im Krümmer (20) durch einen Algorithmus geschätzt wird, der die folgende Formel verwendet : $\quad M_{coll} = \dfrac{P_{coll} . V_{coll}}{R . T_{ape}}$ **,** mit R der individuellen Konstante der Luft.

8. Verfahren zur Schätzung des in einen Motor eintretenden Frischluftdurchsatzes nach Anspruch 1, **dadurch gekennzeichnet, dass** die AGR-Raten diskret ausgehend von differentiellen Gleichungen berechnet werden.

9. Verfahren zur Schätzung des in einen Motor eintretenden Frischluftdurchsatzes nach den Ansprüchen 1 bis 8, **dadurch gekennzeichnet, dass** es für einen Motor ohne HD-AGR geeignet ist, in welchem Fall die Schritte sind:

   - Messung der Temperatur $T_{ape}$ hinter dem Tauscher (14) durch den Temperaturfühler (51), des Drucks im Krümmer $P_{coll}$ durch den Drucksensor (50) und des Frischluftdurchsatzes $Q_{Durchsatzmesser}$ durch den Durchsatzmesser (52),
   - Berechnung, durch die UCE, des Motordurchsatzes $Q_{mot}$ ausgehend von der Messung der Temperatur $T_{ape}$ hinter dem Tauscher (14) und des Drucks $P_{coll}$ im Ansaugkrümmer (20),
   - Berechnung, durch die UCE, der Masse im Ansaugkrümmer (20) ausgehend von der Messung der Temperatur $T_{ape}$ hinter dem Tauscher (14) und des Drucks $\hat{P}_{coll}$ im Ansaugkrümmer (20),
   - Schätzung, durch die UCE, der ND-AGR-Rate $\tau_{AGR\_ND\_mot}$ am Eingang des Krümmers (20) ausgehend von der Gasmasse im Ansaugkrümmer (20), vom Gasdurchsatz im Ansaugkrümmer (20) und vom Frischluftdurchsatz $Q_{Durchsatzmesser}$ gemessen vom Durchsatzmesser (52);
   - Schätzung, durch die UCE, des dynamischen Motorluftdurchsatzes ausgehend vom Motordurchsatz und von der ND-AGR-Rate am Eingang des Motors durch den Ausdruck $\hat{Q}_{Luft\_mot} = (I - \hat{\tau}_{AGR\_ND\_mot}) . Q_{mot}$.

Figure 1

Figure 2

Figure 3

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2910929
- FR 2789731
- FR 2824596
- FR 2833648
- FR 2833649
- EP 1024262 A2
- US 5270935 A
- US 5273019 A